# EUROPÄISCHE PATENTSCHRIFT

(11) **EP 0 969 044 B1**
(45) Veröffentlichungstag und Bekanntmachung des Hinweises auf die Patenterteilung: **03.04.2002**
(21) Anmeldenummer: 99112142.7
(22) Anmeldetag: 24.06.1999
(51) Int. Cl.: C08L 23/14, B26F 1/38

(54) **Stanzplatte**
Counter Plate
Plaque de découpage

(30) Priorität: 30.06.1998 DE 19829246
(43) Veröffentlichungstag der Anmeldung: 05.01.2000
(73) Patentinhaber: TARGOR GmbH, 55116 Mainz (DE)
(72) Erfinder: Dolle, Volker, Dr., 64625 Bensheim (DE); Terwyen, Herbert, 65934 Frankfurt (DE)
(74) Vertreter: Stark, Vera, Dr.

(56) Entgegenhaltungen:
- EP-A- 0 463 406
- EP-A- 0 600 246
- EP-A- 0 602 512
- US-A- 3 515 775
- PATENT ABSTRACTS OF JAPAN vol. 013, no. 190 (C-593), 8. Mai 1989 (1989-05-08) & JP 01 016848 A (JAPAN SYNTHETIC RUBBER CO LTD), 20. Januar 1989 (1989-01-20)

## Beschreibung

Die vorliegende Erfindung betrifft Stanzplatten, enthaltend Polymermischungen aus
a) 50 bis 85 Gew.-% eines Copolymerisats des Propylens (A) mit Ethylen oder C₄-C₁₂-Alk-1-enen, enthaltend 20 bis 80 Gew.-% eines hochmolekularen Copolymerisats des Propylens (I) mit 2,0 bis 7,0 Gew.-% einpolymerisiertes Ethylen oder C₄-C₁₂-Alk-1-en und einer Viskosität von 500 bis 1200 ml/g und 20 bis 80 Gew.-% eines niedermolekularen Copolymerisats des Propylens (II) mit 4,0 bis 10,0 Gew.-% einpolymerisiertes Ethylen oder C₄-C₁₂-Alk-1-en und einer Viskosität von 200 bis 450 ml/g,
b) 5 bis 10 Gew.-% eines Polymerisats des Ethylens mit bis zu 4 Gew.-% einpolymerisiertes C₃-C₁₂-Alk-1-en (B) und
c) 10 bis 40 Gew.-% eines kautschukartigen Copolymerisats aus Propylen und Ethylen oder einem C₄-C₁₂-Alk-1-en (C) mit 30 bis 70 Gew.-% einpolymerisiertem Ethylen oder einem C₄-C₁₂-Alk-1-en,
wobei die Polymermischungen einen Schmelzflußindex (MFR) bei 230°C und einem Gewicht von 5 kg von 0,1 bis 5 g/10 min, eine Molmassenverteilung (M_{W}/M_{N}) von 6 bis 20 und einen Gesamtanteil an Ethylen oder einem C₄-C₁₂-Alk-1-en von 4 bis 15 Gew.-% aufweisen.

Weiterhin betrifft die vorliegende Erfindung ein Verfahren zur Herstellung derartiger Stanzplatten.

Thermoplastische Polymerisate, wie beispielsweise Propylenpolymerisate lassen sich im allgemeinen gut zu Formteilen oder Hohlkörpern verarbeiten. Bei der Herstellung von Stanzplatten treten aber gelegentlich Schwierigkeiten auf, die sich u.a. daraus ergeben, daß nach längerer Benutzung der Stanzplatten diese häufig brüchig werden.

Aus der DE-A 4019053 sind Homopolymerisate des Propylens mit einem breiten Molmassenverhältnis (M_{W}/M_{N}) bekannt, die sich insbesondere zur Herstellung von Folien und Formkörpern eignen. Daraus hergestellte Stanzplatten weisen aber eine gewisse Brüchigkeit und eine relativ rauhe Oberfläche auf, was ihre Anwendbarkeit in der Praxis einschränkt.

In der US-A 3 515 775 werden Mischungen aus Polypropylen, einem Polyethylen (HDPE) und einem Kautschuk aus Copolymeren des Propylens und des Ethylens beschrieben, wobei als Polypropylen sowohl Homo- als auch Copolymere des Propylens verwendet werden können. Gegenstand der EP-A 463 406 sind Propylenpolymere mit einer breiten Molmassenverteilung von 6 bis 30, wobei neben Homopolymeren auch Copolymere des Propylens eingesetzt werden können.

Weiterhin werden in der EP-A 573862 kristalline Polymerisate des Propylens beschrieben, die ebenfalls eine breite Molmassenverteilung (M_{W}/M_{N}) aufweisen. Die Herstellung dieser Polymerisate erfolgt durch Gasphasenpolymerisation in Anwesenheit von Ziegler-Natta-Katalysatoren. Die daraus erhaltenen Propylenpolymerisate weisen aber eine relativ unbefriedigende Brüchigkeit bei ihrer weiteren Verarbeitung auf und sind nicht vollkommen homogen. Die Herstellung von Stanzplatten aus derartigen Propylenpolymerisaten mit Hilfe eines üblichen Plattenpreßverfahrens ist praktisch kaum möglich, da die Viskosität der erhaltenen Schmelze nicht ausreichend ist.

Aufgabe der vorliegenden Erfindung war es daher, den geschilderten Nachteilen abzuhelfen und eine verbesserte Stanzplatte zu finden, die über eine glatte Oberfläche, eine hohe Zähigkeit und eine gute Steifigkeit in Verbindung mit einer hohen Dauergebrauchsfähigkeit verfügt. Weiterhin erstreckt sich die vorliegende Aufgabe auch auf ein möglichst einfaches und wirtschaftliches Verfahren zur Herstellung derartiger Stanzplatten.

Demgemäß wurden die eingangs definierten neuen Stanzplatten aus Polymermischungen gefunden.

Die erfindungsgemäßen Stanzplatten aus Polymermischungen bestehen aus
a) 50 bis 85 Gew.-% eines Copolymerisats des Propylens (A) mit Ethylen oder C₄-C₁₂ Alk-1-enen, enthaltend 20 bis 80 Gew.-% eines hochmolekularen Copolymerisats des Propylens (I) mit 2,0 bis 7,0 Gew.-% einpolymerisiertes Ethylen oder C₄-C₁₂-Alk-1-en und einer Viskosität von 500 bis 1200 ml/g und 20 bis 80 Gew.-% eines niedermolekularen Copolymerisats des Propylens (II) mit 4,0 bis 10,0 Gew.-% einpolymerisiertes Ethylen oder C₄-C₁₂-Alk-1-en und einer Viskosität von 200 bis 450 ml/g,
b) 5 bis 10 Gew.-% eines Polymerisats des Ethylens mit bis zu 4 Gew.-% einpolymerisiertes C₃-C₁₂-Alk-1-en (B) und
c) 10 bis 40 Gew.-% eines kautschukartigen Copolymerisats aus Propylen und Ethylen oder einem C₄-C₁₂-Alk-1-en (C) mit 30 bis 70 Gew.-% einpolymerisiertem Ethylen oder einem C₄-C₁₂-Alk-1-en,
wobei die Polymermischungen einen Schmelzflußindex (MFR) bei 230°C und einem Gewicht von 5 kg von 0,1 bis 5 g/10 min, eine Molmassenverteilung (M_{W}/M_{N}) von 6 bis 20 und einen Gesamtanteil an Ethylen oder einem C₄-C₁₂-Alk-1-en von 4 bis 15 Gew.-% aufweisen.

Die erfindungsgemäßen Stanzplatten enthalten vorzugsweise Polymermischungen aus
a) 50 bis 85 Gew.-%, insbesondere 60 bis 85 Gew.-% des Copolymerisats (A),
b) 5 bis 10 Gew.-%, insbesondere 5 bis 7 Gew.-% des Polymerisats des Ethylens mit bis zu 4 Gew.-% einpolymerisiertes C₃-C₁₂-Alk-1-en (B) und
c) 10 bis 40 Gew.-%, insbesondere 10 bis 35 Gew.-% des kautschukartigen Copolymerisats aus Propylen und Ethylen oder einem C₄-C₁₂-Alk-1-en (C), wobei die Summe der drei Polymerisate (A), (B) und (C) stets 100 Gew.-% ergibt.

Der Schmelzflußindex (MFR) der in den erfindungsgemäßen Stanzplatten verwendeten Polymermischungen, bei 230°C und einem Gewicht von 5 kg, nach DIN 53735, liegt vorzugsweise bei 0,3 bis 3,0 g/10 min. Die Polymermischungen weisen ferner vorzugsweise eine Molmassenverteilung (M_{W}/M_{N}) von 6 bis 15 und einen Gesamtanteil an Ethylen oder einem C₄-C₁₂-Alk-1-en von 5 bis 12 Gew.-% auf.

Unter der Bezeichnung Alk-1-en sollen neben Ethylen insbesondere auch C₄-C₁₂-Alk-1-ene wie But-1-en, Pent-1-en, Hex-1-en, Hept-1-en oder Oct-1-en verstanden werden, wobei Ethylen und But-1-en bevorzugt verwendet werden. Ferner können auch Gemische aus zwei verschiedenen Alk-1-enen zum Beispiel aus Ethylen und But-1-en eingesetzt werden.

Ein Bestandteil der in den erfindungsgemäßen Stanzplatten verwendeten Polymermischungen ist das Copolymerisat des Propylens (A) mit Ethylen oder C₄-C₁₂-Alk-1-enen, welches vorzugsweise 45 bis 75 Gew.-%, insbesondere 48 bis 65 Gew.-% eines hochmolekularen Copolymerisats des Propylens (I) und 25 bis 55 Gew.-%, insbesondere 35 bis 52 Gew.-% eines niedermolekularen Copolymerisats des Propylens (II) enthält. Das hochmolekulare Copolymerisat des Propylens (I) enthält vorzugsweise 2,0 bis 7,0 Gew.-%, insbesondere 3,0 bis 5,0 Gew.-% einpolymerisiertes Ethylen oder C₄-C₁₂-Alk-1-en und weist vorzugsweise eine Viskosität (Viskositätszahl) von 400 bis 1200 ml/g, insbesondere von 450 bis 700 ml/g, jeweils bestimmt bei 135°C in Dekalin, auf. Das niedermolekulare Copolymerisat der Propylens (II) enthält vorzugsweise 4,0 bis 10,0 Gew.-%, insbesondere 4,5 bis 8,0 Gew.-% einpolymerisiertes Ethylen oder C₄-C₁₂-Alk-1-en und weist vorzugsweise eine Viskosität (Viskositätszahl) von 200 bis 450 ml/g, insbesondere von 220 bis 400 ml/g auf, jeweils bestimmt bei 135°C in Dekalin. Als Alk-1-en wird dabei vorzugsweise Ethylen, gegebenenfalls zusammen mit But-1-en verwendet.
Es wird insbesondere ein solches Copolymerisat des Propylen (A) eingesetzt, bei welchem das niedermolekulare Copolymerisat des Propylens (II) einen höheren Ethylengehalt aufweist als das hochmolekulare Copolymerisat des Propylens (I).

Das zu diesen Copolymerisaten (A) führende Verfahren kann in den üblichen, für die Polymerisation von Alk-1-enen verwendeten Reaktoren entweder absatzweise oder bevorzugt kontinuierlich u.a. in Lösung, als Suspensionspolymerisation oder als Gasphasenpolymerisation durchgeführt werden. Geeignete Rührreaktoren sind beispielsweise kontinuierlich betriebene Rührreaktoren, Schleifreaktoren oder Wirbelbettreaktoren. Selbstverständlich kann die Reaktion auch in einer Reihe von mehreren, hintereinander geschaltenen Reaktoren durchgeführt werden. Bevorzugt erfolgt die Polymerisation in der Gasphase oder in einer Suspension (Massepolymerisation). Geeignete Gasphasenreaktoren sind hierbei Wirbelbettreaktoren sowie horizontal oder vertikal gerührte Pulverbettreaktoren. Insbesondere werden Pulverbettreaktoren eingesetzt, bei denen das Reaktionsbett durch vertikale Rührer in Bewegung gehalten werden. Das Reaktionsbett besteht im allgemeinen aus dem Polymerisat, das im jeweiligen Reaktor produziert wird. Geeignete Suspensionsreaktoren sind u.a. Schleifenreaktoren.

Bevorzugt erfolgt die Polymerisation der erfindungsgemäß einzusetzenden Copolymerisate des Propylens bei Temperaturen im Bereich von 30 bis 150°C, und Drücken im Bereich von 10 bis 100 bar in Gegenwart eines Ziegler-Natta-Katalysatorsystems enthaltend,
a) eine titanhaltige Reststoffkomponente, enthaltend mindestens eine halogenhaltige Magnesiumverbindung und einen Elektronendonor,
b) eine Aluminiumverbindung und
c) eine weitere Elektronendonorverbindung.

Eine bevorzugte titanhaltige Feststoffkomponente wird u. a. aus Titantetrachlorid, Diisobutylphthalat, Ethanol und Magnesium-dichlorid hergestellt. Ihre Zusammensetzung und Herstellung ist u.a. aus der EP-A 45975, der EP-A 45977 oder der EP-A 86473 bekannt.

Zur Herstellung einer anderen, ebenfalls bevorzugten titan-haltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Beispiele für geeignete Titanverbindungen sind TiBr₃, TiBr₄, TiCl₃, TiCl₄, Ti(OCH₃)Cl₃, Ti(OC₂H₅)Cl₃, Ti(O-iso-C₃H₇)Cl₃, Ti(O-n-C₄H₉)Cl₃, Ti(OC₂H₅)Br₃, Ti(O-n-C₄H₉)Br₃, Ti(OCH₃)₂Cl₂, Ti(OC₂H₅)₂Cl₂, Ti(O-n-C₄H₉)₂Cl₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ oder Ti(O-n-C₄H₉)₄. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält mindestens eine oder eine Mischung verschiedener halogenhaltiger Magnesiumverbindungen. Als Halogene werden hierbei Chlor, Brom, Jod oder Fluor oder Mischungen aus zwei oder mehr Halogenen verstanden, wobei Chlor oder Brom und insbesondere Chlor bevorzugt sind.

Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere die Chloride oder Bromide, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Geeignete Halogenierungsmitteln sind beispielsweise Halogene, Halogenwasserstoffe, SiCl₄ oder CCl₄ und bevorzugt Chlor oder Chlorwasserstoff.

Beispiele für halogenfreie Verbindungen des Magnesiums, die zur Herstellung der titanhaltige Feststoffkomponente a) geeignet sind, sind Diethylmagnesium, Di-n-propylmagnesium, Di-isopropylmagnesium, Di-n-butylmagnesium, Di-sek.-butylmagnesium, Di-tert.-butylmagnesium, Diamylmagnesium, n-Butylethylmagnesium, n-Butyl-sek.-butylmagnesium, n-Butyloctylmagnesium, Diphenylmagnesium, Diethoxymagnesium, Di-n-propyloxymagnesium, Di-isopropyloxymagnesium, Di-n-butyloxymagnesium, Di-sek.-butyloxy-magnesium, Di-tert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen sind n-Butylethylmagnesium oder n-Butyloctylmagnesium besonders bevorzugt.

Als Beispiele für Grignardverbindungen sind Methylmagnesiumchlorid, Ethylmagnesiumchlorid, Ethylmagnesiumbromid, Ethylmagnesiumjodid, n-Propylmagnesiumchlorid, n-Propylmagnesiumbromid, n-Butylmagnesiumchlorid, n-Butylmagnesiumbromid, sek.-Butylmagnesiumchlorid, sek.-Butylmagnesiumbromid, tert.-Butylmagnesiumchlorid, tert.-Butylmagnesiumbromid, Hexylmagnesiumchlorid, Octylmagnesiumchlorid, Amylmagnesiumchlorid, Isoamylmagnesiumchlorid, Phenylmagnesiumchlorid und Phenylmagnesiumbromid zu nennen.

Bevorzugt werden außer Magnesiumdichlorid oder Magnesiumdibromid vor allem die Magnesiumdi-(C₁-C₁₀-alkyl)-Verbindungen zur Herstellung der titanhaltigen Feststoffkomponente a) eingesetzt.

Darüber hinaus enthält die titanhaltige Feststoffkomponente a) Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 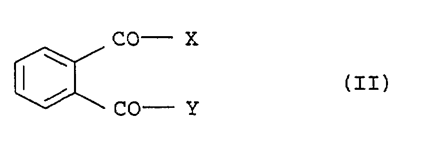 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Di-n-pentylphthalat, Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) in einer besonders bevorzugten Ausführungsform mindestens ein anorganisches Oxid als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse nach ASTM Standard D 4438 bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 3 bis 10 µm aufweisen. Bei den sogenannten Primärpartikeln handelt es sich um poröse, granuläre Oxid-partikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamt-partikel im Bereich von 5 bis 30 %, insbesondere im Bereich von 10 bis 30 %, liegt.

Die Bestimmung der mittleren Teilchendurchmesser der Primärpartikel, der mittleren Durchmesser der Hohlräume bzw. Kanäle sowie des makroskopischen Volumenanteils der Hohlräume und Kanäle des anorganischen Oxids erfolgt zweckmäßigerweise durch Bildanalyse mit Hilfe der Scanning Electron Mikroscopy (Raster-elektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen elektronenmikroskopischen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms.

Das bevorzugt zu verwendende anorganische Oxid kann beispielsweise durch Sprühtrocknen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g, und eine spezifische Oberfläche von 10 bis 1000 m²/g, bevorzugt von 100 bis 500 m²/g, auf, wobei hier die durch Quecksilber-Porosimetrie nach DIN 66133 und durch StickstoffAdsorption nach DIN 66131 bestimmten Werte zu verstehen sind.

Als anorganische Oxide kommen vor allem die Oxide des Siliciums, des Aluminiums, des Titans oder eines der Metalle der I. bzw. der II. Hauptgruppe des Periodensystems in Betracht. Bevorzugte Oxide sind beispielsweise Aluminiumoxid, Magnesiumoxid oder Schichtsilikate. Besonders bevorzugt wird Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie SiCl₄, Chlorsilane oder Aluminiumalkyle zum Einsatz kommen. Der Wassergehalt geeigneter anorganischer Oxide liegt im Bereich von 0 bis 6 Gew.-%. Der Wassergehalt wird üblicherweise dadurch bestimmt, daß man das anorganische Oxid bei 160 °C unter Normaldruck bis zur Gewichtskonstanz trocknet. Die Gewichtsabnahme entspricht dem ursprünglichen Wassergehalt. Vorzugsweise wird ein anorganische Oxid in der Form, wie es im Handel erhältlich ist, ohne weitere Behandlung eingesetzt.

Falls ein anorganisches Oxid zu Einsatz kommt, liegen das anorganische Oxid und die Magnesiumverbindung innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner C₁-C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der magnesiumhaltigen Verbindung, wonach man dieses Gemisch 0,5 bis 5 Stunden lang bei einer Temperatur von 10 bis 120°C in der Regel unter Rühren reagieren läßt. Anschließend fügt man, üblicherweise unter ständigem Rühren, ein Halogenierungsmittel im wenigstens zweifachen, bevorzugt im wenigstens fünffachen molaren Überschuß, bezogen auf die magnesiumhaltige Verbindung, hinzu, wobei man die Mischung etwa 30 bis 120 Minuten reagieren läßt. Danach gibt man bei einer Temperatur von -20 bis 150°C das C₁-C₈-Alkanol sowie die Titanverbindung und die Elektronendonorverbindung hinzu. Die Zugabe der Titanverbindung und der Elektronendonorverbindung kann gleichzeitig mit dem C₁-C₈-Alkanol erfolgen, man kann jedoch auch zunächst das C₁-C₈-Alkanol etwa 10 bis 120 Minuten lang bei einer Temperatur von 0 bis 100°C auf das Zwischenprodukt einwirken lassen. Man setzt pro Mol Magnesium von 1 bis 5 mol, bevorzugt von 1,6 bis 4 mol des C₁-C₈-Alkanols, von 1 bis 15 mol, bevorzugt von 2 bis 10 mol der Titanverbindung und von 0,01 bis 1 mol, bevorzugt von 0,3-bis 0,7 mol, der Elektronendonorverbindung ein.

Dieses Gemisch läßt man wenigstens 10 Minuten, insbesondere wenigstens 30 Minuten bei einer Temperatur im Bereich von 10 bis 150°C, bevorzugt von 60 bis 130°C, im allgemeinen unter Rühren reagieren. Der so erhaltene feste Stoff wird anschließend abfiltriert und mit einem C₇-C₁₀-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150°C mit überschüssigem Titantetrachlorid oder einer im Überschuß vorliegenden Lösung von Titantetrachlorid in einem inerten Lösungsmittel, vorzugsweise einem C₇-C₁₀-Alkylbenzol, wobei das Lösungsmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkyl-aluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkyl-gruppe bedeutet und n für die Zahlen 1 oder 2 steht.

Unter diesen Verbindungen sind insbesondere Diisopropyl-dimethoxysilan, Isobutylisopropyldimethoxysilan, Diisobutyl-dimethoxysilan, Dicyclopentyldimethoxysilan, Dicyclohexyl-dimethoxysilan, Cyclohexylmethyldimethoxysilan, Isopropyl-tert.-butyldimethoxysilan, Isobutyl-sek.-butyldimethoxysilan und Isopropyl-sek.-butyldimethoxysilan hervorzuheben. Ganz besonders bevorzugt ist Dicyclopentyldimethoxysilan.

Die als Cokatalysatoren wirkenden Verbindungen b) und c) kann man sowohl einzeln, nacheinander in beliebiger Reihenfolge als auch gleichzeitig zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt wird der Cokatalysator b) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt. Der Cokatalysator b) kann aber auch in einer solchen Menge eingesetzt werden, daß dieses Verhältnis zwischen Aluminium und Titan außerhalb dieses Bereiches liegt.

Das Molverhältnis zwischen der Aluminiumverbindung b) und der weiteren Elektronendonorverbindung c) liegt im bevorzugten Verfahren im Bereich von 300:1 bis 1:1 und insbesondere im Bereich von 200:1 bis 2:1 und besonders bevorzugt im Bereich von 150:1 bis 2,5:1.

Die Molmasse der Copolymerisate des Propylens (A) kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie Toluol oder Hexan, Inertgas wie Stickstoff oder Argon und kleinere Mengen Polypropylenpulver mitzuverwenden.

Das Copolymerisat des Propylens (A) weist üblicherweise Molmassen (Gewichtsmittel) von 100000 bis 1000000 g/mol, insbesondere von 150000 bis 700000 g/mol auf. Seine Schmelzflußindizes (MFR), bei 230°C und unter einem Gewicht von 5,0 kg, nach DIN 53735 liegen im Bereich von 0,1 bis 5,0 g/10 min, insbesondere im Bereich von 0,3 bis 3,0 g/10 min, seine Viskosität, gemessen in Dekalin bei 135 °C liegt im Bereich von 350 bis 650 ml/g, insbesondere im Bereich von 400 bis 600 ml/g, sein Gehalt an einpolymerisierten Alk-1-en beträgt 2,5 bis 8,5 Gew.-%, insbesondere 3,0 bis 7,5 Gew.-%.

Die Herstellung der Copolymerisate des Propylens (A) erfolgt vorzugsweise nach einem zweistufigen Verfahren, wobei,
a) in einer ersten Polymerisationsstufe bei einem Druck von 10 bis 100 bar, einer Temperatur von 30 bis 150 °C und einer durchschnittlichen Verweilzeit von 0,5 bis 6 Stunden in Gegenwart eines Ziegler-Natta-Katalysatorsystems enthaltend eine titanhaltige Feststoffkomponente, eine Aluminiumkomponente und gegebenenfalls noch eine weitere Elektronendonorverbindung, Propylen und Ethylen oder ein C₄-C₁₂-Alk-1-en miteinander polymerisiert werden, wobei das hochmolekulare Copolymerisat des Propylens (I) entsteht und danach
b) in einer zweiten Polymerisationsstufe in Gegenwart des in der ersten Polymerisationsstufe eingesetzten Ziegler-Natta-Katalysatorsystems bei einem Druck von 10 bis 100 bar, einer Temperatur von 30 bis 150°C und einer durchschnittlichen Verweilzeit von 0,5 bis 6 Stunden dem aus der ersten Polymerisationsstufe ausgebrachten Copolymerisat des Propylens (I), Propylen und Ethylen oder ein C₄-C₁₂-Alk-1-en hinzupolymerisiert, wobei auf diese Weise das niedermolekulare Copolymerisat des Propylens (II) entsteht und wobei das hochmolekulare Copolymerisat des Propylens (I) und das niedermolekulare Copolymerisat des Propylens (II) zusammen das Copolymerisat des Propylens (A) ergeben.

Vorzugsweise wird in beiden Polymerisationsstufen in einer Suspension polymerisiert, nach dem sogenannten Masseverfahren (Bulk-Process), wobei die Monomere, also Propylen und das von Propylen verschiedene Alk-1-en, sowohl Edukte als auch Suspensionsmittel sind.

Weiterhin kann das Verfahren zur Herstellung der Copolymerisate des Propylens (A) auch in der Weise durchgeführt werden, daß man entweder vor der ersten oder vor der zweiten Polymerisationsstufe oder vor jeweils beiden Polymerisationsstufen eine vorgeschaltete Vorpolymerisation durchführt. Sowohl die erste und die zweite Polymerisationsstufe als auch die Vorpolymerisation können entweder in diskontinuierlicher oder in kontinuierlicher Betriebsweise durchgeführt werden, wobei letztere bevorzugt ist.

Die Vorpolymerisation wird vorzugsweise so durchgeführt, daß die Aluminiumverbindung b) und die weitere Elektronendonorverbindung c) zunächst miteinander vermischt und dann mit der titanhaltigen Feststoffkomponente a) in Kontakt gebracht wird. In Gegenwart dergestalt aktivierter Komponenten wird dann Propylen in Suspension oder im Masseverfahren vorpolymerisiert. Bevorzugt erfolgt die Vorpolymerisation in flüssigen Monomeren, bei durchschnittlichen Verweilzeiten von 4 bis 10 Minuten, insbesondere von 4,5 bis 9,0 Minuten, Drücken von 1 bis 50 bar, insbesondere von 1,5 bis 40 bar, und Temperaturen von 10 bis 25°C, insbesondere von 12 bis 23°C. Das Vorpolymerisat wird dann in die jeweilige Polymerisationsstufe eingebracht.

Vorzugsweise wird in der ersten Polymerisationsstufe bei einer Temperatur von 55 bis 100 °C, einem Druck von 10 bis 100 bar und einer durchschnittlichen Verweilzeit von 0,5 bis 3,5 Stunden in flüssigem Propylen polymerisiert, wobei man kontinuierlich das Alk-1-en hinzudosiert, bis sich in der flüssigen Phase eine Alk-1-en-Konzentration von 0,1 bis 20 Gew.-%, bevorzugt von 0,1 bis 10 Gew.-%, einstellt. Es hat sich als vorteilhaft erwiesen, pro kg hergestelltes Copolymerisat des Propylens (I) ein Phasenverhältnis im Bereich von 2,5 bis 4 Liter flüssiges Propylen, vorzugsweise von 2,8 bis 3,5 Liter flüssiges Propylen anzustreben.

Nach der ersten Polymerisationsstufe wird das mehrphasige System in die zweite Polymerisationsstufe übergeführt und dort vorzugsweise bei einer Temperatur von 55 bis 100°C, einem Druck von 10 bis 100 bar und einer mittleren Verweilzeit von 0,5 bis 6 Stunden ein Gemisch aus flüssigem Propylen und einem oder mehreren Alk-1-enen polymerisiert. Das Alk-1-en wird dabei so hinzudosiert, bis sich in der flüssigen Phase eine Alk-1-en-Konzentration von 0,01 bis 30 Gew.-%, insbesondere von 0,1 bis 20 Gew.-%, einstellt. Dabei sollte vorzugsweise ein Phasenverhältnis von 1 bis 2,5 Liter flüssiges Propylen pro kg Copolymerisat des Propylens (A), insbesondere von 1,3 bis 2,2 Liter flüssiges Propylen pro kg Copolymerisat des Propylens (II), eingestellt werden. Es hat sich dabei als vorteilhaft erwiesen, in beiden Polymerisationsstufen unterschiedliche Phasenverhältnisse und Temperaturen auszuwählen. Auch der als Regler bevorzugt verwendete Wasserstoff kann in beiden Polymerisationsstufen in unterschiedlichen Konzentrationen vorliegen.

Nach der zweiten Reaktionsstufe wird das Gemisch aus Propylen, Wasserstoff und Alk-1-en aufgearbeitet. Bevorzugt ist das schnelle Verdampfen des flüssigen Monomeren in einer Stufe. Anschließend wird das Copolymerisat durch Wasserdampfbehandlung monomerfrei gemacht und im Inertgasstrom getrocknet. Das verdampfte Monomergemisch kann kondensiert, getrennt, gereinigt und dann wieder in den Reaktor zurückgeführt werden.

Die erfindungsgemäß einzusetzenden Copolymerisate des Propylens (A) können ferner Additive wie Stabilisatoren, Gleit- und Entformungsmittel, Füllstoffe, Nukleierungsmittel, Antistatika, Weichmacher, Farbstoffe, Pigmente oder Flammschutzmittel enthalten, die vor der Anwendung in üblichen Mengen zugesetzt werden. In der Regel werden diese bei der Granulierung des pulverförmig anfallenden Polymerisationsprodukts in das Copolymerisat eingearbeitet.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthalten die erfindungsgemäß einzusetzenden Copolymerisate des Propylens (A) einen oder mehrere der Stabilisatoren in Mengen von bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die einzusetzenden Copolymerisate des Polypropylens (A) kommen z.B. Talkum, Kreide oder Glasfasern in Betracht, wobei hier Mengen von bis zu 50 Gew.-% verwendet werden können.

Geeignete Nukleierungsmittel sind beispielsweise anorganische Zusatzstoffe wie Talkum, Kieselsäure oder Kaolin, Salze von Mono- oder Polycarbonsäuren wie Natriumbenzoat oder Aluminium-tert.-butylbenzoat, Dibenzylidensorbitol oder dessen C₁-C₈-alkylsubstituierte Derivate wie Methyl- oder Dimethyldibenzylidensorbitol oder Salze von Diestern der Phosphorsäure wie Natrium-2,2'-methylenbis (4,6,-di-tert.-butylphenyl)phosphat. Der Gehalt der statistischen Propylencopolymerisate an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Die Herstellung der in den erfindungsgemäßen Stanzplatten verwendeten Polymermischungen erfolgt vorzugsweise weiterhin dadurch, daß man im Anschluß an die Herstellung der Copolymerisate des Propylens (A) in den beiden Polymerisationsstufen a) und b) sowie gegebenenfalls nach einer entsprechenden Aufarbeitung des Copolymerisats (A) und Zusatz von Additiven diesem in einer dritten Stufe c) in einer üblichen Mischungsapparatur bei Temperaturen von 180 bis 300°C, insbesondere von 190 bis 290°C und durchschnittlichen Verweilzeiten von 0,1 bis 5,0 Minuten, insbesondere von 0,2 bis 4,0 Minuten, das Polymerisat des Ethylens (B) und das kautschukartige Copolymerisat (C) hinzumischt. Als Mischungsapparaturen können dabei insbesondere Extruder oder Kneter eingesetzt werden, wobei Zweischneckenextruder besonders bevorzugt sind.

Das Verfahren zur Herstellung der Polymermischungen besteht also aus den beiden Polymerisationsstufen a) und b) und der anschließenden Vermischung des aus a) und b) erhaltenen Copolymerisats des Propylens (A) mit dem Polymerisat des Ethylens mit bis zu 4 Gew.-% einpolymerisiertes C₃-C₁₂-Alk-1-en (B) und dem kautschukartigen Copolymerisat (C) in der Stufe c).

Als Polymerisat des Ethylens mit bis zu 4 Gew.-% einpolymerisiertes C₃-C₁₂-Alk-1-en (B) kommen neben einem Ethylenhomopolymerisat (HDPE) mit einer Dichte von 0,900 bis 0,950 g/cm³, insbesondere von 0,905 bis 0,945 g/cm³ u.a. auch Copolymerisate des Ethylens mit untergeordneten Anteilen von But-1-en in Betracht. Derartige Polymerisate des Ethylens (B) sind u.a. erhältlich durch Polymerisation von Ethylen mit Hilfe üblicher Ziegler-Katalysatoren oder Phillips-Katalysatoren in der Gasphase oder in einer Suspensionspolymerisation. Die Polymerisate des Ethylens (B) sind auch mit Hilfe von Metallocen-Katalysatoren erhältlich. Sie können ferner bis zu 4,0 Gew.-%, insbesondere bis zu 2,0 Gew.-% einpolymerisierte C₃-C₁₂-Alk-1-ene, beispielsweise Propylen, But-1-en oder Hex-1-en enthalten. Sie können u.a. im Kunststoffhandel bezogen werden und ferner im vergleichbaren Umfang die gleichen Additive enthalten, wie bereits beim Copolymerisat des Propylens (A) beschrieben.

Als kautschukartiges Copolymerisat aus Propylen und Ethylen oder einem C₄-C₁₂-Alk-1-en (C) mit 30 bis 70 Gew.-%, insbesondere mit 35 bis 65 Gew.-% einpolymerisiertem Ethylen oder C₄-C₁₂-Alk-1-en finden u.a. folgende Copolymerisate Verwendung: Copolymerisate des Propylens mit untergeordneten Anteilen von Ethylen oder But-1-en oder Terpolymerisate des Propylens mit untergeordneten Anteilen von Ethylen und But-1-en oder Copolymerisate des Propylens mit Cycloolefinen. Unter der Bezeichnung Alk-1-ene sollen dabei die gleichen ungesättigten Comonomere verstanden werden, die bereits beim Copolymerisat des Propylens (A) beschrieben sind. Die Herstellung derartiger kautschukartiger Copolymerisate aus Propylen und einem Alk-1-en erfolgt üblicherweise durch Gasphasenpolymerisation oder Suspensionspolymerisation mit Hilfe von Ziegler-Natta-Katalysatoren oder Phillips-Katalysatoren oder Metallocen-Katalysatoren. Solche kautschukartigen Copolymerisate (C) können u.a. im Kunststoffhandel bezogen werden. Es ist möglich, den kautschukartigen Copolymerisaten (C) im vergleichbaren Umfang die gleichen Additive hinzuzufügen, wie beim Copolymerisat des Propylens (A) beschrieben.

In der Mischungsapparatur kann man dem Copolymerisat des Propylens (A) das Polymerisat des Ethylens (B) und das kautschukartige Copolymerisat (C) sowohl getrennt als auch zusammen in Form eines sogenannten "Master-Batches" hinzufügen.

Die Polymermischungen aus dem Copolymerisat des Propylens (A) mit Alk-1-enen, dem Polymerisat des Ethylens (B) und dem kautschukartigen Copolymerisat (C) eignen sich zur Herstellung von Stanzplatten.

Die Herstellung der erfindungsgemäßen Stanzplatten erfolgt vorzugsweise nach einem ebenfalls erfindungsgemäßen Verfahren, welches dadurch gekennzeichnet ist, daß in einer Plattpreßapparatur eine Stanzplatte aus einem Granulat der Polymermischungen aus (A), (B) und (C) unter einem Druck von 1 bis 500 bar, einer Temperatur von 180 bis 300°C und einer Preßzeit von 0,1 bis 120 Minu ten hergestellt wird.

Die erfindungsgemäßen Stanzplatten zeichnen sich u.a. durch eine hohe Bruchfestigkeit und Zähigkeit, eine gute Steifigkeit und Dauergebrauchsfähigkeit verbunden mit einer glatten Oberfläche aus. Das ebenfalls erfindungsgemäße Verfahren zur Herstellung von Stanzplatten ist ohne großen Aufwand durchzuführen und zeichnet sich u.a. durch eine hohe Wirtschaftlichkeit aus.

### Beispiele

### Beispiel 1

### Herstellung des Copolymerisats des Propylens (A)

Es wird in zwei hintereinandergeschalteten Rührkesseln von je 16 l Inhalt kontinuierlich polymerisiert. Beide Reaktoren sind mit je 10 l flüssigem Propylen beschickt. Als Katalysatorkomponente b) wird Triethylaluminium in einer Konzentration von 1 mmol/l verwendet; die Konzentration der Katalysatorkomponente C) beträgt 0,1 mmol/l. Als Komponente (C) wird Cyclohexylmethyldimethoxysilan verwendet. Die Wasserstoffkonzentration in der flüssigen Phase des ersten Reaktors wird auf 120 Vol. ppm eingestellt.

Im ersten Reaktor wird ein Gemisch aus Propylen und Ethylen bei 70°C in Gegenwart einer titanhaltigen Feststoffkomponente als Katalysatorkomponente a) enthaltend u. a. Titantetrachlorid, Diisobutylphthalat, Magnesiumdichlorid und Ethanol (Katalysator Montell® FT 4S von Montell) bei einem Druck von 32 bar und einer durchschnittlichen Verweilzeit von 1,2 Stunden polymerisiert. Katalysator, Cokatalysator, Ethylen, Propylen und Wasserstoff werden kontinuierlich nachdosiert. Pro kg Propylen wurden 15 g Ethylen eindosiert. Es wird ein Feststoffanteil von 224 g Copolymerisat pro Liter Suspension (Propylen) gefahren. Daraus berechnet sich ein Phasenverhältnis von 3,3 l flüssiges Propylen pro kg Polypropylen (PP). Wasserstoff (H₂) wird so nachdosiert, daß sich in der flüssigen Phase eine Konzentration von 120 Vol.-ppm einstellt. Das erhaltene hochmolekulare Copolymerisat des Propylens (I) wies eine Viskosität von 680 ml/g und einen Ethylengehalt von 3,2 Gew.-% auf.

Das im ersten Reaktor erhaltene Copolymerisat des Propylens (I) wird zusammen mit dem Katalysator in den zweiten Reaktor überführt. Im zweiten Reaktor wird Ethylen, Wasserstoff und Propylen nachdosiert. Pro kg Propylen wurden 35 g Ethylen eindosiert. Die H₂-Konzentration in der flüssigen Phase beträgt 1600 Vol. ppm. Die Reaktortemperatur im zweiten Reaktor beträgt ebenfalls 70°C, der Druck liegt bei 35 bar, die durchschnittliche Verweilzeit bei 0,8 Stunden. Pro Liter der Suspension aus Propylen ergeben sich 324 g Copolymerisat des Propylens (II). Daraus berechnet sich ein Phasenverhältnis von 1,9 l flüssiges Propylen pro kg Copolymerisat. Das im zweiten Reaktor erhaltene niedermolekulare Copolymerisat des Propylens (II) wies eine Viskosität von 260 ml/g und einen Ethylengehalt von 5,5 Gew.-% auf.

Nachdem das Copolymerisat (A) als Pulver aus dem zweiten Reaktor isoliert worden war, ergab sich eine Katalysatorausbeute von 33 kg Copolymerisat A /g Katalysator. Es wurde eine Molmassenverteilung (M_{W}/M_{N}) von 9,5 gemessen, ein MFR-Wert von 1,4 g/10 min, eine Viskositätszahl von 487 ml/g. Mittels IR-Spektroskopie wurde ein Ethylen-Einbau von 4,2 Gew.-% ermittelt. Der xylolkaltlösliche Anteil wurde mit 9,5 Gew.-% gemessen. Das Copolymerisat (A) enthielt etwa 58,0 Gew.-% des hochmolekularen Copolymerisats (I) und etwa 42,0 Gew.-% des niedermolekularen Copolymerisats (II).

### Prüfmethoden:

- Molmassenverteilung (M_{W}/M_{N}) :: durch Gelpermeationschromatographie
- Schmelzflußindex (MFR) :: nach DIN 53735, bei 230°C und unter einem Gewicht von 5 kg
- Viskositätszahl (ml/g) :: bestimmt in Dekalin bei 135°C
- Comonomergehalt (Gew.-%) :: durch Infrarotspektroskopie (IR-Spektroskopie)

### Beispiel 2

### Stanzplattenprüfung:

Da die Eignung eines PP-Werkstoffes für Stanzplatten nicht allein über übliche Prüfwerte wie Härte, E-Modul, Schlagzähigkeit und Kerbschlagzähigkeit beschrieben werden kann, müssen praxisnahe Tests durchgeführt werden.

Bei der verwendeten Prüfeinrichtung handelt es sich um einen Stanzapparat mit einem kreisförmigen Stanzmesser. Die zu prüfende Stanzplatte wird als Preßplatte hergestellt. (Durchmesser:150 mm, Dicke:25 mm) und in die Stanzapparatur eingebaut. Das Stanzmesser hat einen Durchmesser von ca. 50 mm. Nach jedem Stanzhub bei einem Druck von 150 bar wird die zu prüfende Stanzplatte um einen Drehwinkel bewegt. Die Einschnitte der Stanzungen überschneiden sich dann. Es entsteht ein "rosettenartiges" Muster auf der Stanzplatte. Der Durchmesser jeder Rosette beträgt ca. 130 mm. Die Anzahl der Stanzungen kann unterschiedlich hoch gewählt werden.
Nach ca. 1000 Stanzungen kann anhand des Stanzbildes qualitativ im Vergleich zu anderen Proben die Eignung des Materials bewertet werden. Außerdem kann die geprüfte Platte nach Entfernung loser ausgestanzter Teile rückgewogen werden und der Anteil herausgestanzten Materials gravimetrisch bestimmt werden.

Für die qualitative Bewertung werden folgende Kriterien geprüft:
- Eindringtiefe des Stanzmessers?
- Aussehen der Einschnitte?
- Ablösen von Partikeln?
- Aussehen der Stanzplatte in den Zwickelbereichen der sich überschneidenden Stanzungen?

### Beispiel 3

### Herstellung einer Polymermischung

80 kg des aus dem Beispiel 1 erhaltenen Copolymerisats des Propylens (A) wurden zunächst mit jeweils 0,1 Gew.-% Irganox® 1010 der Firma Ciba-Geigy und 0,1 Gew.-% Hostanox® PAR 24 der Firma Hoechst vermischt.

Bei Irganox® 1010 von Ciba-Geigy handelt es sich um Penta-erythrityltetrakis [3-(3,5-bis (1,1-dimethylethyl)-4-hydroxyphenol) propionat ] und bei Hostanox® PAR 24 von Hoechst um einen Stabilisator auf der Basis eines organischen Phosphorsäureesters von Thiobisphenol.

Danach wurden das mit den Additiven versehene, erhaltene Copolymerisat des Propylens (A) mit 20 kg eines sogenannten Kautschuk-Batches (Exxelor® VM 42 der Firma Exxon Chemicals) versetzt. Der Kautschuk-Batch enthielt 66 Gew.-% eines kautschukartigen Copolymerisats (C) aus Propylen und 60 Gew.-% einpolymerisiertem Ethylen und 34 Gew.-% eines Ethylenhomopolymerisats (B) einer Dichte von 0,94 g/cm³. Zusätzlich wurden 0,2 Gew.-% einer Farbmischung enthaltend Eisen(III)oxid hinzugefügt. Diese Mischung aus 79,7 Gew.-% Copolymerisat des Propylens (A), 6,8 Gew.-% Polymerisat des Ethylens (B) und 13,1 Gew.-% kautschukartiges Copolymerisat (C) sowie 0,1 Gew.-% Irganox, 0,1 Gew.-% Hostanox und 0,2 Gew.-% der Farbmischung wurde unter Inertgas in einem Zweischneckenextruder mit 53 mm Schneckendurchmesser bei ca. 240°C granuliert. Am fertigen Granulat wurde eine Viskositätszahl von 451 ml/g und ein Ethylen-Gehalt von 10,5 Gew.% gemessen, ferner ein Schmelzflußindex (MFI) von 2 g/10 min, bei 230°C und 5 kg und eine Molmassenverteilung (M_{W}/M_{N}) von 8.

### Beispiel 4

Aus dem Granulat aus Beispiel 3 wurde in einer Plattenpreß-apparatur eine Preßplatte (Durchmesser 150 mm, Dicke 25 mm) unter einem Druck von 90 bar und bei einer Temperatur von 220°C in einer Preßzeit von 90 min hergestellt.

### Beispiel 5

Die Platte aus Beispiel 4 wurde in einer Stanzapparatur nach Beispiel 2 eingebaut und es wurden 5000 Stanzungen ausgeführt. Die Preßplatte wies das charakteristische überlappende Rosettenmuster auf. Die Eindringtiefe des Messers wurde an den tiefsten Stellen zu 1 mm bestimmt. Die Einschnitte hatten glatte Kanten. Die Flanken lagen dicht beieinander, da sie sich nach dem Eindringen des Stanzmessers wieder zurückstellten. Es wurde gefunden, daß sich keine Partikel oder Bruchstücke aus der Platte herauslösten. Insbesondere im Bereich der Überlappungen zweier Stanzungen wurden keine herausgelösten Fragmente detektiert. Die Platte wies nur einen geringen Gewichtsverlust von 0,05 Gew.% auf.

### Beispiel 6

Die Stanzung nach Beispiel 5 wurde mit einer neuen Platte wiederholt; die Stanzzahl wurde auf 10000 Stanzungen verdoppelt. Der Gewichtsverlust betrug ebenfalls nur 0,06 Gew.%.

### Beispiel 7

Die Stanzung nach Beispiel 5 wurde mit einer neuen Platte wiederholt; die Stanzzahl wurde auf 35000 Stanzungen erhöht. Der Gewichtsverlust betrug ebenfalls nur 0,3 Gew.%.

### Vergleichsbeispiel A

Mit dem gleichen Ziegler-Natta-Katalysator wie im Beispiel 1 beschrieben, wurde in einem Rührkessel von 70 l Inhalt diskontinuierlich 50 l flüssiges Propylen polymerisiert. Es wurden insgesamt 354 mg der titanhaltigen Feststoffkomponente a), pro Liter Propylen 2 mmol Triethylaluminium und pro Liter Propylen 0,1 mmol Cyclohexylmethyldimethoxysilan eingesetzt. Anschließend wurden 2,3 Nl Wasserstoff eindosiert. Die Polymerisationstemperatur betrug 70°C, die Polymerisationszeit 100 Minuten. Nach der Polymerisation wurde der Reaktor entspannt, dabei wurde das flüssige Monomere verdampft und das Produkt als Pulver aus dem Reaktor entnommen.

Es ergab sich eine Katalysatorausbeute von 18,3 kg Propylen-homopolymerisat/g Katalysator. Es wurde ein MFR (230/5) von 1,4 g/10 min gemessen. Der xylolkaltlösliche Anteil wurde zu 2,9 Gew.-% bestimmt.

Das aus dem Vergleichsbeispiel A erhaltene Pulver wurde unter Inertgas in einem Zweischneckenextruder mit 53 mm Schneckendurchmesser bei ca. 240°C granuliert. Dabei wurden als Stabilisatoren 0,15 Gew.-% Irganox® 1010 von Ciba-Geigy und 0,15 Gew.-% Hostanox® PAR 24 von Hoechst hinzugefügt. Außerdem wurde im gleichen Gewichtsverhältnis die gleiche Farbmischung zugesetzt wie im Beispiel 3 beschrieben.

Aus dem so erhaltenen Granulat wurde analog Beispiel 4 eine Preßplatte hergestellt.

Diese Platte wurde in eine Stanzapparatur nach Beispiel 2 eingebaut und es wurden 5000 Stanzungen ausgeführt. Die Preßplatte wies das charakteristische Rosettenmuster wie im Beispiel 5 auf. Die Eindringtiefe des Messers wurde an den tiefsten Stellen zu 0,8 mm bestimmt. An den Einschnitten war Weißbruch zu erkennen. Es wurde herausgefunden, daß sich Partikel mit einem Durchmesser von ca. 2 mm aus der Platte herauslösten. Insbesondere im Bereich der Überlappungen zweier Stanzungen wurden vermehrt Bruchstücke detektiert. Die Platte wies einen Gewichtsverlust von 1,5 Gew.-% auf. Das Material ist wegen des hohen Gewichtsverlustes nicht zur Verwendung als Stanzplattenmaterial geeignet.

### Beispiel 8

Beispiel 1 wurde wiederholt, es wurde jedoch Biscyclopentyldimethoxysilan als Katalysatorkomponente c) eingesetzt. Nachdem das Polymerisat als Pulver aus dem zweiten Reaktor isoliert worden war, ergab sich eine Katalysatorausbeute von 35,3 kg Copolymerisat(A)/g Katalysator. Es wurde eine Molmassenverteilung M_{W}/M_{N} von 9,8 gemessen, ein MFR-Wert von 1,5 g/10 min, eine Viskositätszahl von 478 ml/g. IR-spektroskopisch wurde ein Ethylen-Einbau von 4,1 Gew.-% ermittelt. Der xylolkaltlösliche Anteil wurde mit 7,8 Gew.-% gemessen.

Das erhaltene Copolymerisat (A) wurde zunächst analog dem Beispiel 3 mit Irganox® 1010 und Hostanox® PAR 24 versetzt und dann mit 20 Gew.-% des Kautschuk-Batches (Exxelor® VM 42 von Exxon Chemicals) versehen.

Der Kautschuk-Batch enthielt 66 Gew.-% eines kautschukartigen Copolymerisats (C) aus Propylen und 60 Gew.-% einpolymerisiertem Ethylen und 34 Gew.-% eines Ethylenhomopolymerisats (B) einer Dichte von 0,94 g/cm³. Zusätzlich wurden 0,2 Gew.-% einer Farbmischung aus Eisen(III)oxid hinzugefügt. Diese Mischung aus 79,7 Gew.-% Copolymerisat des Propylens (A), 6,8 Gew.-% Polymerisat des Ethylens (B) und 13,1 Gew.-% kautschukartiges Copolymerisat (C) sowie 0,1 Gew.-% Irganox, 0,1 Gew.-% Hostanox und 0,2 Gew.-% der Farbmischung wurde analog dem Beispiel 3 im Zweischneckenextruder vermischt.

Analog Beispiel 4 und 7 wurde aus dem Granulat eine Preßplatte hergestellt, die in der Stanzapparatur geprüft wurde. Der Gewichtsverlust betrug nur 0,28 Gew. %.

Ein Vergleich zwischen den aus den erfindungsgemäßen Beispielen 5, 6, 7 und 8 erhaltenen Stanzplatten und den Stanzplatten des Vergleichsbeispiels A macht deutlich, daß erstere einen Gewichtsverlust von deutlich weniger als 1 Gew.-% aufweisen, wogegen der Gewichtsverlust der Stanzplatten des Vergleichsversuches A bei 1,5 Gew.-% liegt. Weiterhin zeichnen sich die erfindungsgemäßen Stanzplatten u.a. durch eine glatte Oberfläche, eine hohe Steifigkeit und Zähigkeit verbunden mit einer hohen Dauergebrauchsfähigkeit aus.

## Patentansprüche

1. Stanzplatten, enthaltend Polymermischungen aus
a) 50 bis 85 Gew.-% eines Copolymerisats des Propylens (A) mit Ethylen oder C₄-C₁₂-Alk-1-enen, enthaltend 20 bis 80 Gew.-% eines hochmolekularen Copolymerisats des Propylens (I) mit 2,0 bis 7,0 Gew.-% einpolymerisiertes Ethylen oder C₄-C₁₂-Alk-1-en und einer Viskosität von 500 bis 1200 ml/g und 20 bis 80 Gew.-% eines niedermolekularen Copolymerisats des Propylens (II) mit 4,0 bis 10,0 Gew.-% einpolymerisiertes Ethylen oder C₄-C₁₂-Alk-1-en und einer Viskosität bestimmt in Dekalin bei 135°C von 200 bis 450 ml/g,
b) 5 bis 10 Gew.-% eines Polymerisats des Ethylens mit bis zu 4 Gew.-% einpolymerisiertes C₃-C₁₂-Alk-1-en (B) und
c) 10 bis 40 Gew.-% eines kautschukartigen Copolymerisats aus Propylen und Ethylen oder einem C₄-C₁₂-Alk-1-en (C) mit 30 bis 70 Gew.-% einpolymerisiertem Ethylen oder C₄-C₁₂-Alk-1-en,
wobei die Polymermischungen einen Schmelzflußindex (MFR) bei 230°C und einem Gewicht von 5 kg von 0,1 bis 5 g/10 min, eine Molmassenverteilung (M_{W}/M_{N}) von 6 bis 20 und einen Gesamtanteil an Ethylen oder einem C₄-C₁₂-Alk-1-en von 4 bis 15 Gew.-% aufweisen.

2. Stanzplatten nach Anspruch 1, wobei ein solches Copolymerisat des Propylens (A) mit Ethylen oder einem C₄-C₁₂-Alk-1-en eingesetzt wird, enthaltend 45 bis 75 Gew.-% eines hochmolekularen Copolymerisats des Propylens (I) mit 2 bis 7 Gew.-% einpolymerisiertes Ethylen oder einem C₄-C₁₂-Alk-1-en und einer Viskosität von 500 bis 1200 ml/g und 25 bis 55 Gew.-% eines niedermolekularen Copolymerisats des Propylens (II) mit 4 bis 10 Gew.-% einpolymerisiertes Ethylen oder einem C₄-C₁₂-Alk-1-en und einer Viskosität von 200 bis 450 ml/g.

3. Stanzplatten nach einem der Ansprüche 1 oder 2, wobei das verwendete Polymerisat (B) ein Ethylenhomopolymerisat (HDPE) mit einer Dichte von 0,900 bis 0,950 g/cm³ ist.

4. Stanzplatten nach den Ansprüchen 1 bis 3, wobei das kautschukartige Copolymerisat aus Propylen und Ethylen oder einem C₄-C₁₂-Alk-1-en (C) 35 bis 65 Gew.-% einpolymerisiertes Ethylen oder ein C₄-C₁₂-Alk-1-en enthält.

5. Stanzplatten nach den Ansprüchen 1 bis 4, enthaltend
a) 60 bis 85 Gew.-% des Copolymerisats (A),
b) 5 bis 7 Gew.-% des Polymerisats des Ethylens mit bis zu 4 Gew-% einpolymerisiertes C₃-C₁₂-Alk-1-en (B) und
c) 10 bis 35 Gew.-% des kautschukartigen Copolymerisats aus Propylen und Ethylen oder ein C₄-C₁₂-Alk-1-en (C).

6. Verfahren zur Herstellung von Stanzplatten gemäß den Ansprüchen 1 bis 5, wobei zunächst in einer zweistufigen Polymerisation das Copolymerisat des Propylens (A) hergestellt wird und dieses anschließend mit dem Polymerisat des Ethylens mit bis zu 4 Gew.-% einpolymerisiertem C₃-C₁₂-Alk-1-en (B) und dem kautschukartigen Copolymerisat (C) in einer Mischungsapparatur vermengt wird, **dadurch gekennzeichnet, daß** man
a) in einer ersten Polymerisationsstufe bei einem Druck von 10 bis 100 bar, einer Temperatur von 30 bis 150°C und einer durchschnittlichen Verweilzeit von 0,5 bis 6 Stunden in Gegenwart eines Ziegler-Natta-Katalysatorsystems enthaltend eine titanhaltige Feststoffkomponente, eine Aluminiumkomponente und gegebenenfalls noch eine weitere Elektonendonorverbindung, Propylen und Ethylen oder ein C₄-C₁₂-Alk-1-en miteinander polymerisiert werden, wobei das hochmolekulare Copolymerisat des Propylens (I) entsteht und danach
b) in einer zweiten Polymerisationsstufe in Gegenwart des in der ersten Polymerisationsstufe eingesetzten Ziegler-Natta-Katalysatorsystems bei einem Druck von 10 bis 100 bar, einer Temperatur von 30 bis 150°C und einer durchschnittlichen Verweilzeit von 0,5 bis 6 Stunden dem aus der ersten Polymerisationsstufe ausgebrachten Copolymerisat des Propylens (I) Propylen und Ethylen oder ein C₄-C₁₂-Alk-1-en hinzupolymerisiert, wobei auf diese Weise das niedermolekulare Copolymerisat des Propylens (II) entsteht und anschließend
c) in einer dritten Stufe dem aus den beiden Polymerisationsstufen erhaltenen Copolymerisat (A) in einer Mischungsapparatur bei Temperaturen von 180 bis 300°C und durchschnittlichen Verweilzeiten von 0,1 bis 5 Minuten das Polymerisat des Ethylens mit bis zu 4 Gew.-% einpolymerisiertem C₃-C₁₂-Alk-1-en (B) und das kautschukartige Copolymerisat (C) hinzumischt und anschließend in einer Plattpreßapparatur eine Stanzplatte aus einem Granulat der Polymermischungen unter einem Druck von 1 bis 500 bar, einer Temperatur von 180 bis 300°C und einer Preßzeit von 0,1 bis 120 Minuten herstellt

7. Verfahren nach Anspruch 6, **dadurch gekennzeichnet, daß** die Copolymerisation in den beiden Polymerisationsstufen in einer Suspension durchgeführt wird.

## Claims

1. A stamping plate comprising a polymer blend comprising
a) from 50 to 85% by weight of a copolymer of propylene (A) with ethylene or C₄-C₁₂-alk-1-enes comprising from 20 to 80% by weight of a high molecular weight copolymer of propylene (I) containing from 2.0 to 7.0% by weight of copolymerized ethylene or C₄-C₁₂-alk-1-ene and having a viscosity of from 500 to 1200 ml/g and from 20 to 80% by weight of a low molecular weight copolymer of propylene (II) containing from 4.0 to 10.0% by weight of copolymerized ethylene or C₄-C₁₂-alk-1-ene and having a viscosity determined in decalin at 135°C of from 200 to 450 ml/g,
b) from 5 to 10% by weight of a polymer of ethylene containing up to 4% by weight of copolymerized C₃-C₁₂-alk-1-ene (B) and
c) from 10 to 40% by weight of a rubber-like copolymer of propylene and ethylene or a C₄-C₁₂-alk-1-ene (C) containing from 30 to 70% by weight of copolymerized ethylene or C₄-C₁₂-alk-1-ene,
and having a melt flow index (MFI) at 230°C under a weight of 5 kg of from 0.1 to 5 g/10 min, a molecular weight distribution (M_{w}/Mₙ) of from 6 to 20 and a total content of ethylene or a C₄-C₁₂-alk-1-ene of from 4 to 15% by weight.

2. A stamping plate as claimed in claim 1, wherein the copolymer of propylene (A) with a ethylene or a C₄-C₁₂-alk-1-ene comprises from 45 to 75% by weight of a high molecular weight copolymer of propylene (I) containing from 2 to 7% by weight of copolymerized ethylene or a C₄-C₁₂-alk-1-ene and having a viscosity of from 500 to 1200 ml/g and from 25 to 55% by weight of a low molecular weight copolymer of propylene (II) containing from 4 to 10% by weight of copolymerized ethylene or a C₄-C₁₂-alk-1-ene and having a viscosity of from 200 to 450 ml/g.

3. A stamping plate as claimed in claim 1 or 2, wherein the polymer (B) which is used is an ethylene homopolymer (HDPE) having a density of from 0.900 to 0.950 g/cm³.

4. A stamping plate as claimed in any of claims 1 to 3, wherein the rubber-like copolymer of propylene and ethylene or a C₄-C₁₂-alk-1-ene (C) contains from 35 to 65% by weight of copolymerized ethylene or a C₄-C₁₂-alk-1-ene.

5. A stamping plate as claimed in any of claims 1 to 4, comprising
a) from 60 to 85% by weight of the copolymer (A),
b) from 5 to 7% by weight of the polymer of ethylene containing up to 4% by weight of copolymerized C₃-C₁₂-alk-1-ene (B) and
c) from 10 to 35% by weight of the rubber-like copolymer of propylene and ethylene or a C₄-C₁₂-alk-1-ene (C).

6. A process for preparing a stamping plate as claimed in any of claims 1 to 5 in which, in a two-stage polymerization, the copolymer of propylene (A) is prepared first and this is subsequently mixed with the polymer of ethylene containing up to 4% by weight of copolymerized C₃-C₁₂-alk-1-ene (B) and the rubber-like copolymer (C) in a mixing apparatus, wherein
a) in a first polymerization step at from 30 to 150°C, a pressure of from 10 to 100 bar and an average residence time of from 0.5 to 6 hours in the presence of a Ziegler-Natta catalyst system comprising a titanium-containing solid component, an aluminum component and, if desired, a further electron donor compound, propylene and ethylene or a C₄-C₁₂-alk-1-ene are polymerized with one another to give the high molecular weight copolymer of propylene (I) and then
b) in a second polymerization step at from 30 to 150°C, a pressure of from 10 to 100 bar and an average residence time of from 0.5 to 6 hours in the presence of the Ziegler-Natta catalyst system used in the first polymerization step, propylene and ethylene or a C₄-C₁₂-alk-1-ene are polymerized onto the copolymer of propylene (I) from the first polymerization step, forming the low molecular weight copolymer of propylene (II), and subsequently
c) in a third step, the polymer of ethylene containing up to 4% by weight of copolymerized C₃-C₁₂-alk-1-ene (B) and the rubber-like copolymer (C) are mixed into the copolymer (A) obtained from the two polymerization steps in a mixing apparatus at from 180 to 300°C and an average residence time of from 0.1 to 5 minutes, and a stamping plate is subsequently produced from a granulated polymer blend in a platen press at from 180 to 300°C, a pressure of from 1 to 500 bar and a pressing time of from 0.1 to 120 minutes.

7. A process as claimed in claim 6, wherein the copolymerization in the two polymerization steps is carried out in suspension.

## Revendications

1. Plaques de découpage, contenant des mélanges de polymères constitués
a) de 50 à 85 % en poids d'un copolymère du propylène (A) et de l'éthylène ou d'alcènes-1 en C₄-C₁₂, contenant de 20 à 80 % en poids d'un copolymère à grande masse moléculaire du propylène (I) et de 2,0 à 7,0 % en poids d'éthylène polymérisé ou d'un alcène-1 en C₄-C₁₂, et ayant une viscosité de 500 à 1200 ml/g, ainsi que de 20 à 80 % en poids d'un copolymère à faible masse moléculaire du propylène (II) et de 4,0 à 10,0 % en poids d'éthylène polymérisé ou d'un alcène-1 en C₄-C₁₂ et ayant une viscosité de 200 à 450 ml/g, déterminée dans la décaline à 135°C,
b) de 5 à 10 % en poids d'un polymère de l'éthylène et d'une quantité allant jusqu'à 4 % en poids d'un alcène-1 en C₃-C₁₂ (B) polymérisé, et
c) de 10 à 40 % en poids d'un copolymère de type caoutchouc, du propylène et de l'éthylène ou d'un alcène-1 en C₄-C₁₂ (C), constitué de 30 à 70 % en poids d'éthylène polymérisé ou d'un alcène-1 en C₄-C₁₂,
où les mélanges de polymères ont un indice de fluidité (MFR) à 230°C pour une masse de 5 kg de 0,1 à 5 g/10 min, une distribution des masses moléculaires (M_{W}/M_{N}) de 6 à 20, et une teneur totale en éthylène ou en un alcène-1 en C₄-C₁₂ de 4 à 15 % en poids.

2. Plaques de découpage selon la revendication 1, dans lesquelles on utilise un copolymère du propylène (A) et de l'éthylène ou d'un alcène-1 en C₄-C₁₂, qui contient de 45 à 75 % en poids d'un copolymère à grande masse moléculaire du propylène (I) et de 2 à 7 % en poids d'éthylène polymérisé ou d'un alcène-1 en C₄-C₁₂ et ayant une viscosité de 500 à 1200 ml/g, et de 25 à 55 % en poids d'un copolymère à faible masse moléculaire du propylène (II) et de 4 à 10 % en poids d'éthylène polymérisé ou d'un alcène-1 en C₄-C₁₂, et ayant une viscosité de 200 à 450 ml/g.

3. Plaques de découpage selon l'une des revendications 1 ou 2, dans lesquelles le polymère (B) utilisé est un homopolymère de l'éthylène (PEHD) ayant une masse volumique de 0,900 à 0,950 g/cm³.

4. Plaques de découpage selon les revendications 1 à 3, dans lesquelles le copolymère de type caoutchouc, constitué de propylène et d'éthylène ou d'un alcène-1 en C₄-C₁₂ (C) contient de 35 à 65 % en poids d'éthylène polymérisé et un alcène-1 en C₄-C₁₂.

5. Plaques de découpage selon les revendications 1 à 4, contenant
a) de 60 à 85 % en poids du copolymère (A),
b) de 5 à 7 % en poids du polymère de l'éthylène et d'une quantité allant jusqu'à 4 % en poids d'un alcène-1 en C₃-C₁₂ (B) polymérisé, et
c) de 10 à 35 % en poids du copolymère de type caoutchouc, constitué de propylène et d'éthylène ou d'un alcène-1 en C₄-C₁₂ (C).

6. Procédé de fabrication de plaques de découpage selon les revendications 1 à 5, dans lequel on prépare d'abord, dans le cadre d'une polymérisation en deux étapes, le copolymère du propylène (A), puis, dans un appareil mélangeur, on mélange ce dernier au polymère de l'éthylène et d'une quantité allant jusqu'à 4 % en poids de l'alcène-1 en C₃-C₁₂ (B) polymérisé, et avec le copolymère de type caoutchouc (C), **caractérisé en ce que**
a) dans une première étape de polymérisation sous une pression de 10 à 100 bar, à une température de 30 à 150°C et pendant un temps de séjour moyen de 0,5 à 6 heures en présence d'un système catalyseur de Ziegler-Natta contenant un composant solide contenant du titane, un composant de l'aluminium et éventuellement encore un autre composé donneur d'électrons, on polymérise l'un avec l'autre du propylène et de l'éthylène ou un alcène-1 en C₄-C₁₂, avec formation du copolymère à grande masse moléculaire du propylène (I), puis
b) dans une deuxième étape de polymérisation, en présence du système catalyseur de Ziegler-Natta utilisé dans la première étape de polymérisation, sous une pression de 10 à 100 bar, à une température de 30 à 150°C et pendant un temps moyen de séjour de 0,5 à 6 heures, on ajoute par polymérisation, au copolymère du propylène (I) obtenu après la première étape de polymérisation, du propylène et de l'éthylène ou un alcène-1 en C₄-C₁₂, auquel cas on obtient de cette manière le copolymère à faible masse moléculaire du propylène (II), puis
c) dans une troisième étape, on ajoute en mélangeant au copolymère (A) obtenu dans les deux étapes de polymérisation, dans un appareil mélangeur à des températures de 180 à 300°C et pendant des temps moyens de séjour de 0,1 à 5 minutes, le polymère de l'éthylène et d'une quantité allant jusqu'à 4 % de l'alcène-1 en C₃-C₁₂ (B) polymérisé, ainsi que le copolymère de type caoutchouc (C), puis, dans un appareil de pressage de plaques, on fabrique une plaque de découpage à partir d'un granulé des mélanges de polymères sous une pression de 1 à 500 bar, à une température de 180 à 300°C et pendant un temps de pressage de 0,1 à 120 minutes.

7. Procédé selon la revendication 6, **caractérisé en ce que** la copolymérisation, dans les deux étapes de polymérisation, est mise en oeuvre en suspension.
